(19) **Europäisches Patentamt**

**European Patent Office**

**Office européen des brevets**

(11) **EP 1 098 522 A1**

(12) **EUROPEAN PATENT APPLICATION**

(43) Date of publication:
**09.05.2001 Bulletin 2001/19**

(51) Int. Cl.⁷: **H04N 7/24**

(21) Application number: **00309266.5**

(22) Date of filing: **20.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.11.1999 GB 9926321**
**05.04.2000 GB 0008414**
**14.08.2000 GB 0019981**

(71) Applicant:
**SONY UNITED KINGDOM LIMITED**
**Weybridge KT13 0XW (GB)**

(72) Inventors:
• **Stone, Jonathan James**
**Reading, Berkshire RG7 3SS (GB)**
• **Turner, Alan**
**Basingstoke, Hampshire RG24 8XF (GB)**

(74) Representative:
**Pratt, Richard Wilson et al**
**D. Young & Co,**
**21 New Fetter Lane**
**London EC4A 1DA (GB)**

(54) **Method and apparatus for identifying a digital signal with a watermark**

(57)    Video material and /or audio material and/or data material is identified by putting a material identifier into the material as a watermark. The identifier is preferably a UMID which identifies the material to e.g. frame accuracy in the case of video and may also identify the owner of the material. The Identifier is used to link the material to a database containing metadata relating to the material.

**EP 1 098 522 A1**

**Description**

The present invention relates to identifying video and/or audio material. The invention also relates to a method of, and apparatus for, identifying video and/or audio material and/or data.

The following discussion refers to video for convenience. The invention is not limited to video: it may be applied to audio. It may be applied to data other than video and audio. It may be applied to any one or more of video, audio and data. "Material" as used herein refers to any one or more of video, audio and other data.

It is known to identify the ownership of video material by applying a "watermark" to the video signal. A watermark may also, or alternatively identify a distributor of the material. A watermark is a coded signal, which is combined with the video signal in such a way that the coded signal is invisible or substantially invisible in the displayed image. The coded signal is detectable in the video signal: it is used for detecting infringement of copyright for example.

According to one aspect of the present invention, there is provided a method of identifying material comprising the step of inserting an identifying code into the material as a watermark, which code directly or indirectly identifies the material.

According to another aspect of the invention, there is provided apparatus comprising a code generator for generating a code which directly or indirectly identifies material, and a watermark generator for generating, from the code, a watermark and for combining the watermark with the material.

Thus instead of identifying the ownership or distributor, the present invention uses the watermark to directly or indirectly identify the material. This allows other metadata relating to the material to be directly or indirectly linked to the material. Examples of such metadata include technical metadata and descriptive metadata. An example of descriptive metadata is the title of the material. In the case of video material, an example of technical metadata is data concerning camera aspect ratio. The metadata may be stored in a database, separate from the recording medium carrying the material, and the identifying code in the watermark links the material to the database.

By providing the identifying code in the watermark in the signal, the material retains its identification throughout the production and distribution chain following the provision of the code. This also avoids the necessity of a separate channel such as a separate tape track for the identifying code. That makes easier subsequent material processing with retention of the identifying code in association with the material.

In one embodiment of the invention, the material is recorded on an example of a recording medium and the identifying code is a code identifying the example of the recording medium. The identifying code may be, for example, a serial number. By way illustration, CDs may be given serial numbers, each CD being an example of a recording medium. The identifying code may be used to refer to a UMID, a unique material identifier thus indirectly identifying the material.

In embodiments of the invention, the code is inserted into the signal or recorded with the signal in addition to being in the watermark. For example, the code may be in user bits of vertical interval time code and/or linear time code of video material.

In another embodiment, the code is a UMID thus directly identifying the material. UMIDs may be used to identify video, audio and data material.

A UMID allows unique linking of the material metadata stored in a database.

In an embodiment in which the code is a UMID, the instance number of the UMID is used to provide in a plurality of copies of a piece of material respective UMIDs and thus watermarks which are unique to individual users or groups of users in addition to identifying the material.

For a better understanding of the present invention, reference will now be made by way of example to the accompanying drawings in which:

Figure 1 is a schematic diagram of an illustrative video material processing system embodying the present invention;
Figure 2 illustrates a basic and extended UMID;
Figure 3 illustrates a reduced data structure;
Figure 4 is a schematic block diagram of an illustrative spatial domain watermarking system;
Figure 5 is a schematic block diagram of an illustrative frequency domain watermarking system;
Figure 6 illustrates a data structure of a metadata base;
Figures 7 to 9 illustrate the use of Linear Time Codes;
Figure 10 is a block diagram of an illustrative watermark inserter;
Figure 11 is a block diagram of an illustrative UMID detector; and
Figure 12 is a block of a system for removing a watermark from a watermarked image.

The following description illustrates the invention by way of reference to identifying video material. However, the invention is not limited to video material.

Overview

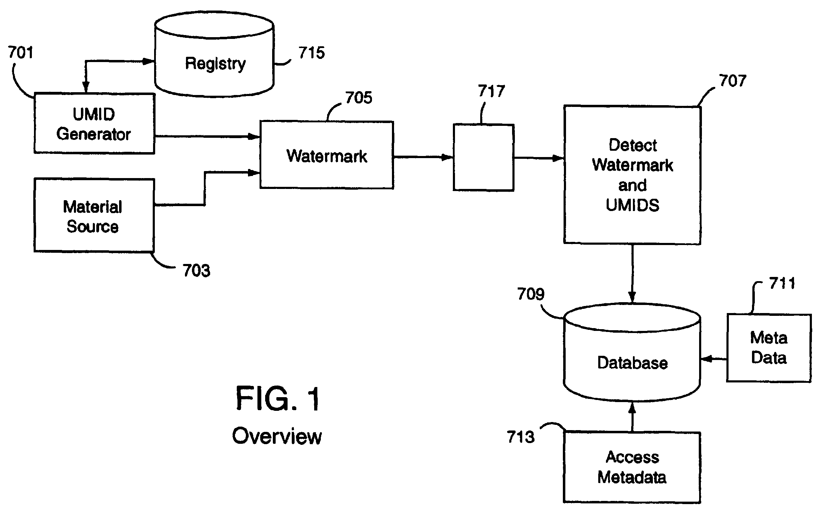

Referring to Figure 1, UMIDs are generated by a generator 701. UMIDs are described in the section *UMIDs* below. A UMID universally uniquely identifies video and/or audio, and/or other data material as will be described below. Video material is generated by a source 703. The source may be any video source known in the art, including a camera, a VTR, a disc recorder/reproducer, and a video server amongst other sources. In accordance with an embodiment of the present invention, a basic UMID is inserted as a watermark, by a watermark inserter 705, into every frame of the video material. Examples of inserters 705 are described in the section *Watermarking* below.

The watermarked video material is utilised in a utiliser 717. The utiliser 717 may be a transmission, or other distribution, chain, a video processor for example an editor, or a video store amongst other possibilities.

One or more watermark detectors 707 is/are provided for detecting the watermark in the material. The detectors may be provided in the utiliser 717, or in the transmission or distribution chain, or elsewhere in a video production and distribution system.

The UMID in the material uniquely links the material to metadata in a database processor 709. Metadata which may be included in the database is described in the section *Metadata* below.

By detecting the watermark and extracting therefrom the UMID using the detector 709, the metadata relevant to the material may be accessed. Metadata may be provided in the database by means symbolically shown at 711. Such means may be a keyboard and/or one or more communication links via which metadata is provided from one or more sources (not shown).

Using the basic UMID allows access to the metadata relating to the material. By putting the UMID in the video material as a watermark the need for a separate channel, such as a separate track in a tape, is avoided. If the watermark is robust, then it will survive processing e.g. editing or special effects, and/or transmission and/or distribution and so maintain the link with the metadata.

An embodiment of the invention uses an extended UMID. An extended UMID allows the identification of the owner of the material by virtue of the Country, Organisation and User bytes. Also, an extended UMID has a Time/Date field which may include video field time codes. Thus an extended UMID not only may be provided in every frame but also may identify uniquely every frame by time codes and may identify ownership of every frame. Video material is often produced by combining clips which may have different owners. Thus the watermarks of this embodiment of the invention allow identification of ownership to the accuracy of one frame. Also the need for a separate channel is avoided and links to the associated metadata are provided by the UMIDs. Details of ownership are preferably provided in the database of processor 709.

Fingerprinting

A basic UMID has an Instance Number field which is used to distinguish different instances of the same material. For example an original video clip is a first instance of the material. A copy of it is a second instance. The instance number may represent different representations of the same material. If say the first instance is analogue then a digital compressed version of that is another instance.

In accordance with an embodiment of the invention, the instance number is used to identify authorised users of the video material. For example, copies of original video material owned by one organisation may be made available to other organisations for distribution through different distribution channels or in different markets or in different versions. Each organisation is identified by a code entered into the instance number field of the basic UMID.

This requires a method of generating codes which are different from normal instance numbers. (The SMPTE standard, current at the time of writing this patent application, for generating instance numbers does not cover generating the codes of this embodiment of the invention.) To avoid ambiguity, a central registry of Codes and the organisations to which they refer may be provided by a database processor referred to as Registry 715. An organisation requiring a code applies to the registry which allocates a code. Alternatively, rules for generating the codes automatically by the organisations may be provided. As another alternative, the codes may be automatically generated by the organisations using random number generators to minimise but not necessarily eliminate ambiguity. Preferably codes generated automatically would be registered with the registry 715 after generation.

Thus the UMID as a watermark may be used to identify different authorised users of video material. This is done to frame accuracy and if done using an extended UMID also identifies the owner(s) of the video material.

In addition to providing the identifying code, preferably a UMID, in a watermark, the code may also be in the signal. For example it may be in the vertical blanking interval. It may be in the user bits of Linear Time Code (LTC) of a tape and/or in the user bits of the Vertical Interval Time Code (VTIC). The *Insertion into LTC* is described below in the section of that name.

Providing the identifying code in VITC or LTC may be advantageous when processing the video material allowing the identifying code to be more easily and simply accessed than by decoding it from the watermark.

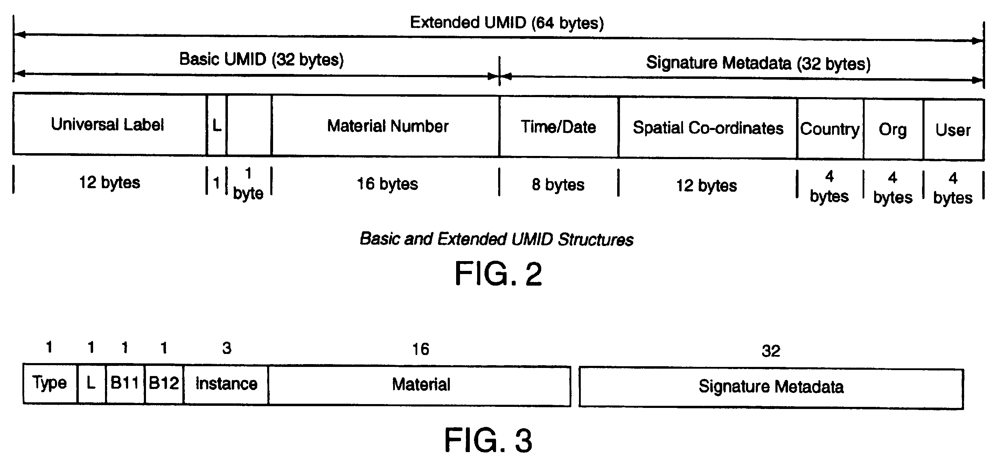

UMIDs-Figures 2 and 3.

UMIDs

A UMID is described in SMPTE Journal, March 2000. Such a UMID is referred to herein as the UMID of the SMPTE standard. Referring to Figure 2, an extended UMID is shown. It comprises a first set of 32 bytes of basic UMID and a second set of 32 bytes of signature metadata.

The first set of 32 bytes is the basic UMID. The components are:

•A 12-byte Universal Label to identify this as a SMPTE UMID. It defines the type of material which the UMID identifies and also defines the methods by which the globally unique Material and locally unique Instance numbers are created.

•A 1-byte length value to define the length of the remaining part of the UMID.

•A 3-byte Instance number which is used to distinguish between different 'instances' of material with the same Material number.

•A 16-byte Material number which is used to identify each clip. Each Material number is the same for related instances of the same material.

The second set of 32 bytes of the signature metadata as a set of packed metadata items used to create an extended UMID. The extended UMID comprises the basic UMID followed immediately by signature metadata which comprises:

•An 8-byte time/date code identifying the time and date of the Content Unit creation.

•A 12-byte value which defines the spatial co-ordinates at the time of Content Unit creation.

•3 groups of 4-byte codes which register the country, organisation and user codes

Each component of the basic and extended UMIDs will now be defined in turn.

**The 12-byte Universal Label**

The first 12 bytes of the UMID provide identification of the UMID by the registered string value defined in table 1.

| Byte No. | Description | Value (hex) |
|---|---|---|
| 1 | Object Identifier | 06h |
| 2 | Label size | 0Ch |

| _3 | Designation: ISO | 2Bh |
|---|---|---|
| 4 | Designation: SMPTE | 34h |
| 5 | Registry: Dictionaries | 01h |
| 6 | Registry: Metadata Dictionaries | 01h |
| 7 | Standard: Dictionary Number | 01h |
| 8 | Version number | 01h |
| 9 | Class: Identification and location | 01h |
| 10 | Sub-class: Globally Unique Identifiers | 01h |
| 11 | Type: UMID (Picture, Audio, Data, Group) | 01, 02, 03, 04h |
| 12 | Type: Number creation method | XXh |

**Table 1:** Specification of the UMID Universal Label

The hex values in table 1 may be changed: the values given are examples. Also the bytes 1-12 may have designations other than those shown by way of example in the table. Referring to the Table 1, in the example shown byte 4 indicates that bytes 5-12 relate to a data format agreed by SMPTE. Byte 5 indicates that bytes 6 to 10 relate to "dictionary" data. Byte 6 indicates that such data is "metadata" defined by bytes 7 to 10. Byte 7 indicates the part of the dictionary containing metadata defined by bytes 9 and 10. Byte 10 indicates the version of the dictionary. Byte 9 indicates the class of data and Byte 10 indicates a particular item in the class.

In the present embodiment bytes 1 to 10 have fixed preassigned values. Byte 11 is variable. Thus referring to Figure 3, and to Table 1 above, it will be noted that the bytes 1 to 10 of the label of the UMID are fixed. Therefore they may be replaced by a 1 byte 'Type' code T representing the bytes 1 to 10. The type code T is followed by a length code L. That is followed by 2 bytes, one of which is byte 11 of Table 1 and the other of which is byte 12 of Table 1, an instance number (3 bytes) and a material number (16 bytes). Optionally the material number may be followed by the signature metadata of the extended UMID and/or other metadata.

The UMID type (byte 11) has 4 separate values to identify each of 4 different data types as follows:

'01h' = UMID for Picture material
'02h' = UMID for Audio material
'03h' = UMID for Data material
'04h' = UMID for Group material (i.e. a combination of related essence).

The last (12th) byte of the 12 byte label identifies the methods by which the material and instance numbers are created. This byte is divided into top and bottom nibbles where the top nibble defines the method of Material number creation and the bottom nibble defines the method of Instance number creation.

**Length**

The Length is a 1-byte number with the value '13h' for basic UMIDs and '33h' for extended UMIDs.

**Instance Number**

The Instance number of the SMPTE standard is a unique 3-byte number which is created by one of several means defined by the SMPTE standard. It provides a link between a particular 'instance' of a clip and externally associated metadata. Without this instance number, all material could be linked to any instance of the material and its associated metadata.

The creation of a new clip requires the creation of a new Material number together with a zero Instance number. Therefore, a non-zero Instance number indicates that the associated clip is not the source material. An Instance number is primarily used to identify associated metadata related to any particular instance of a clip.

In accordance with an embodiment of the present invention, the instance number of the SMPTE standard is modified. It is used to identify authorised users of the material. Thus a code is used as a "fingerprint". The code may be generated as described above in the section "Fingerprinting".

**Material Number**

The 16-byte Material number is a non-zero number created by one of several means identified in the standard. The number is dependent on a 6-byte registered port ID number, time and a random number generator.

**Signature Metadata**

Any component from the signature metadata may be null-filled where no meaningful value can be entered. Any null-filled component is wholly null-filled to clearly indicate a downstream decoder that the component is not valid.

**The Time-Date Format**

The date-time format is 8 bytes where the first 4 bytes are a UTC (Universal Time Code) based time component. The time is defined either by an AES3 32-bit audio sample clock or SMPTE 12M depending on the essence type.

The second 4 bytes define the date based on the Modified Julian Data (MJD) as defined in SMPTE 309M. This counts up to 999,999 days after midnight on the 17th November 1858 and allows dates to the year 4597.

**The Spatial Co-ordinate Format**

The spatial co-ordinate value consists of three components defined as follows:

•Altitude: 8 decimal numbers specifying up to 99,999,999 metres.
•Longitude: 8 decimal numbers specifying East/West 180.00000 degrees (5 decimal places active).
•Latitude: 8 decimal numbers specifying North/South 90.00000 degrees (5 decimal places active).

The Altitude value is expressed as a value in metres from the centre of the earth thus allowing altitudes below the sea level.

It should be noted that although spatial co-ordinates are static for most clips, this is not true for all cases. Material captured from a moving source such as a camera mounted on a vehicle may show changing spatial co-ordinate values.

**Country Code**

The Country code is an abbreviated 4-byte alpha-numeric string according to the set defined in ISO 3166. Countries which are not registered can obtain a registered alpha-numeric string from the SMPTE Registration Authority.

**Organisation Code**

The Organisation code is an abbreviated 4-byte alpha-numeric string registered with SMPTE. Organisation codes have meaning only in relation to their registered Country code so that Organisation codes can have the same value in different countries.

**User Code**

The User code is a 4-byte alpha-numeric string assigned locally by each organisation and is not globally registered. User codes are defined in relation to their registered Organisation and Country codes so that User codes may have the same value in different organisations and countries.

**Freelance Operators**

Freelance operators may use their country of domicile for the country code and use the Organisation and User codes concatenated to e.g. an 8 byte code which can be registered with SMPTE. These freelance codes may start with the '~' symbol (ISO 8859 character number 7Eh) and followed by a registered 7 digit alphanumeric string.

It will be noted from the foregoing discussion that a UMID may be used to identify not only video material, but also audio material, data material, and a group of material.

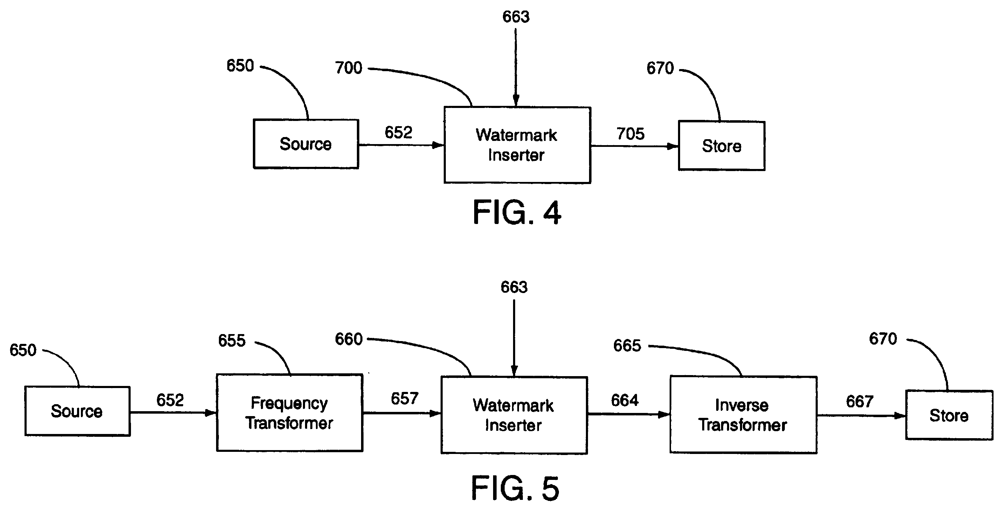

Watermarking-Figures 4 and 5

Digital watermarking allows a code to be embedded in a digital work. The digital watermark may be used in conjunction with other deterrents such as encryption.

In embodiments of the present invention, the watermark undetectable. It is preferably unalterable and non-removable by unauthorised individuals. The watermark preferably does not adversely degrade the underlying work in a manner that is readily perceptible. In addition, the watermark is readily discernible by authorised individuals.

The watermark may be placed in, for example, a header or label of a digital work, or the watermark may be embedded within the data fields of the digital work itself. Preferably, the watermark occurs many times within a work. For example it may be present in every frame of a digital video work. Alternatively, the watermark may be placed directly onto the media which carries the digital work.

The watermark may be robust such that it may not be removed or degraded by individuals seeking to make unauthorised copies. Unauthorised attempts to remove the robust watermark should result in severe degradation of the data, rendering the data useless. Situations where the data contains much redundant information, such as in video, may render the robust watermark susceptible to attack by, for example, frame dropping or the like. Hence, the robust watermark should preferably withstand such attacks and may, for example, change from frame to frame and may utilise any error correction/recovery techniques which are applied to data.

Alternatively, the watermark may be fragile such that it is damaged should an unauthorised copy be made. That enables detection of the unauthorised copy.

However, the watermark should also preferably be reversible and removable by the owner, if required. Removal may be particularly useful during, for example, a post-production stage to reduce any cumulative effects of the watermark on the underlying work. Also, where information from different sources are edited together it may be desired that a different watermark is applied to the edited product.

End-user equipment may be configured to recognise the watermark such that it will not allow copying of protected works. Alternatively, the equipment may be configured such that it will only play works originating from a particular owner, distributed through a particular distributor or where the work contains a particular authorisation code.

The watermark may be extracted by comparing watermarked with non-watermarked data and its authenticity established.

Three techniques for imperceptibly embedding a watermark within the data fields of a digital work will now be described in more detail. The first is to embed the watermark in the spatial domain, the second is to embed the watermark in the frequency domain, and the third is an example of the second. All of these embedding processes are such that they do not result in a significant degradation of the data being watermarked.

Spatial Domain Watermarks

The process, in overview, involves altering predetermined data bits with the bits of a watermark to produce watermarked data. The existence of watermark may be determined by performing the reverse operation on the watermarked data.

One approach is to embed a watermark by substituting insignificant bits of pseudo-randomly selected data with bits representing the watermark. However, these watermarks are susceptible to destruction by processing the least significant bits of the data. Another is to insert geometric patterns into the data which represent a watermark. However, these watermarks are susceptible destruction by geometric processing of the data. A further approach is to embed a watermark in a manner which resembles quantisation noise as described with reference to Figure 4 below and more fully described in articles titled "Embedding Secret Information into a Dithered Multi-Level Image" by K Tanaka et al, IEEE Military Communications Conference pages 216-220, 1990 and "Video Steganography" by K Mitsui, IMA Intellectual Property Proceedings, volume 1, pages 187-296, 1994. However, these watermarks are susceptible destruction by signal processing, particularly by requantisation of the data.

Referring now to Figure 4, a source 650 produces a digital data signal 652, such as digital video. A watermark inserter 700 is couple to the source 650 and receives the digital data signal 652. The watermark inserter 700 applies the watermark 663 by applying the watermark to the digital data signal 652 in a manner that resemble requantisation noise to produce watermarked data 705. A storage device 670 is coupled to the watermark inserter 700 and stores the watermarked data 705.

A yet further approach is to randomly select n pairs of image points ($a_i$, $b_i$) and increase the brightness of $a_i$ by one while decreasing the brightness of $b_i$ by one. Assuming certain statistical properties of the image are satisfied, the sum of the differences of the n pairs of points will be 2n.

Alternatively, where the data signal comprises at least two components (for example [Y, UV] according to MPEG, PAL or NTSC), the watermark may be embedded by assigning values to these components which, in combination, do not usually occur. Also, where a watermark is to be embedded in, for example, video data containing two image fields, a positive watermark may be placed into the first field and a negative watermark into the second field. When watermarked image fields are played there is a masking effect due to the interlacing of the fields and the visual perception of the watermark is significantly reduced.

Frequency Domain Watermarks

The process, in overview, involves obtaining a frequency spectral image of the data to which the watermark is to be applied. The watermark is embedded into predetermined components of the frequency spectral image. Thereafter, the watermarked frequency spectral image is subjected to an inverse transform to produce watermarked data. The watermark may be extracted by performing the reverse operation on the watermarked data.

One approach is to partition the data into blocks and compute the Discrete Cosine Transform (DCT) of each of these blocks. Thereafter, the predetermined frequency coefficients of the blocks may be adjusted. A pseudo random subset of blocks may be chosen and in each such block coefficients of predetermined subset of frequencies adjusted such that their relative values encode a data bit. The variance in the relative values and the selection of the predetermined subset of frequencies should be such that the watermark is not perceptible. However, this watermark may be sensitive to damage by noise or further processing.

Alternatively, the watermark may be encoded by adjusting every frequency coefficient by a smaller amount as described with reference to Figure 5 below and more fully described in European Patent Application 0 766 468, NEC Corporation. This has the advantage of making the watermark less sensitive to damage, but increases overall noise levels.

Referring now to Figure 5, a source 650 produces a digital data signal 652, such as digital video. A frequency transformer 655 is coupled to the source 650 and receives the digital data signal 652. The frequency transformer 655 transforms the digital data signal 652 into frequency spectral data 657 using, for example, Discrete Cosine Transforms or Fast Fourier Transform techniques. A watermark inserter 660 is couple to the frequency transformer and receives the frequency spectral data 657. The watermark inserter applies the watermark 663 by adjusting each coefficient of the frequency spectral data 657 to produce watermarked frequency spectral data 663. An inverse frequency transformer 665 is coupled to the watermark inserter 660 and receives the watermarked frequency spectral data 663. The inverse frequency transformer 665 converts the watermarked frequency spectral data 663 into watermarked data 667. A storage device 670 is coupled to the inverse frequency transformer 665 and stores the watermarked data 667.

A further approach is to increase the changes to coefficients in particular frequencies by exploiting the existence of so-called masking phenomena in the human visual and auditory systems. Masking occurs when certain regions of data are occluded by perceptually more prominent regions elsewhere in the data. However, these regions need to be identified prior to inserting the watermark which increases the embedding complexity.

A yet further approach is to compress the digital data and embed the watermark into the x and y co-ordinates of motion vectors of the compressed data. This has the advantage of the watermark being embedded after compression and, hence, is more robust to processing.

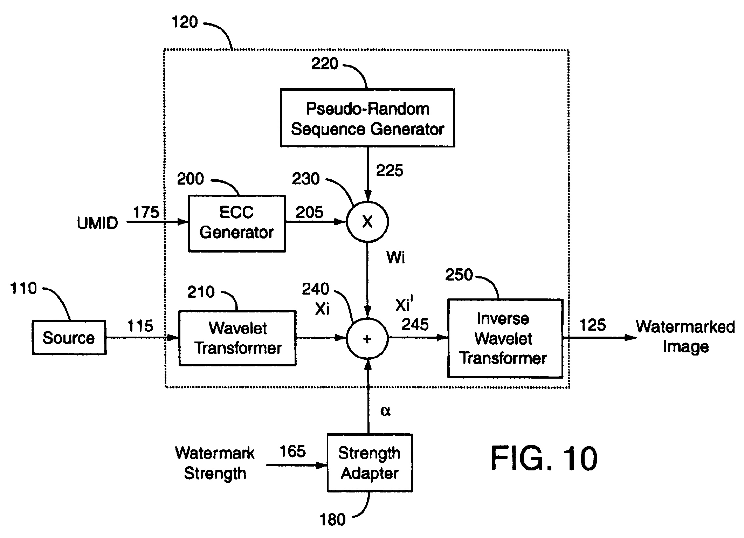

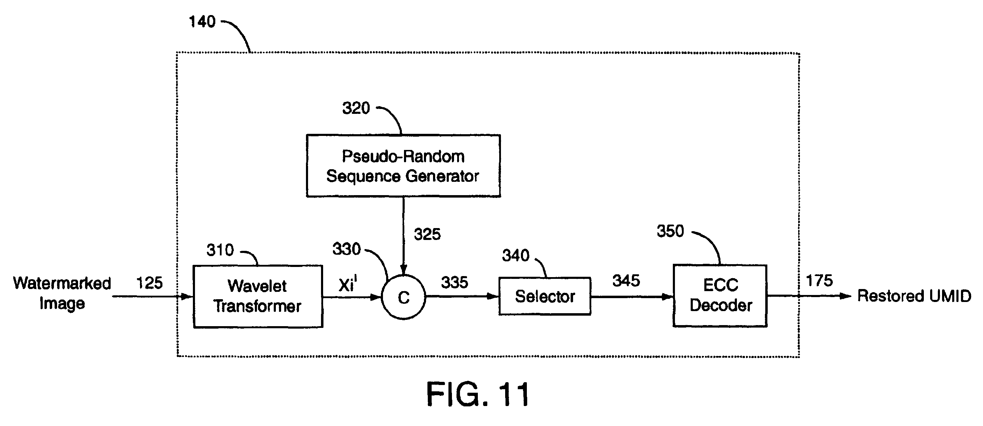

A currently preferred embodiment of a watermark inserter is shown in Figure 10, and a currently preferred UMID detector is shown in Figure 11.

Figure 10 illustrates the watermark embedder 120. The watermark embedder 120 comprises a pseudo-random sequence generator 220, an error correction coding generator 200, a wavelet transformer 210, an inverse wavelet transformer 250, a first combiner 230 and second combiner 240.

The error correction coding generator 200 receives a UMID 175 and outputs an error correction coded UMID 205 to the first combiner 230. The pseudo-random sequence generator 220 outputs a pseudo-random sequence 225 to the combiner 230. The first combiner 230 receives the error correction coded UMID 205 from the error correction coding generator 200, the pseudo-random sequence 225 from the pseudo-random sequence generator 220 and outputs a watermark comprising a sequence of bits Wi to the second combiner 240. The wavelet transformer 210 receives a video image 115 from the source 110 and outputs a wavelet image X'i (comprising wavelet coefficients X'i where X'i is the ith wavelet coefficient of the transformed image to which bit Wi of the watermark is applied) to the second combiner 240. The second combiner 240 receives the watermark Wi from the first combiner 230, the wavelet image Xi from the wavelet transformer 210, a watermark strength coefficient a from the strength adapter 180 and outputs a water-

marked wavelet image $X'i = Xi + \alpha Wi$  where $X'i$ is the ith watermarked coefficient. The watermarked wavelet image $Xi$ is applied to the inverse wavelet transformer 250. The inverse wavelet transformer 250 receives the watermarked wavelet image $Xi$ and outputs a watermarked image 125.

The operation of the embedder 120 will now be described in more detail. In overview, a UMID 175 associated with an video image 115 is processed to provide error correction coded UMID 205 and thereafter combined with the pseudo-random sequence 225 to produce a spectrum signal spread spectrum signal which is used as the watermark $Wi$. A video image 115 is transformed into a wavelet image $Xi$ and thereafter the watermark 235 is applied in combiner 240 to produce the watermarked wavelet image 245. The watermarked wavelet image 245 is then transformed to produce a watermarked image 125.

The use of error correction coding to produce an error correction coded UMID 205 is advantageous since it allows the UMID 175 to be reconstructed more readily should some information be lost. This provides a degree of robustness to future processing or attacks against the watermark. The use of a pseudo-random sequence 225 to generate a spread spectrum signal for use as a watermark 235 is advantageous since it allows the error correction coded UMID 205 to be spread across a larger number of bits. Also, it allows the watermark $Wi$ to be more effectively hidden. Applying the watermark $Wi$ to a wavelet image 215 is advantageous since this reduces the perceptibility of the watermark. Furthermore, the strength $\alpha$ of the watermark 235 may be adjusted to ensure that the watermark 235 is not perceptible.

The operation of a watermark decoder 140 will now be explained in more detail with reference to Figure 11. The watermark decoder 140 receives the watermarked image 125 and outputs the UMID 175. The watermark decoder 140 comprises a wavelet transformer 310, a pseudo-random sequence generator 320, a correlator 330, a selector 340 and a error correction coding decoder 350.

The wavelet transformer 310 receives the watermarked image 125 and, in known manner, outputs a watermarked wavelet $X'i$. The correlator 330 receives a pseudo-random sequence 325 from the pseudo-random sequence generator 320, the watermarked wavelet 315 from the wavelet transformer 310 and outputs a watermark image bit correlation sequence 335. The watermarked image bit correlation sequence is determined in the following way. Each bit of the pseudo-random sequence 325 is coded as follows, a "1" bit is coded as a "1" and a "0" bit is coded as a "-1". The correlation value of each pixel of the selected portion of the watermarked wavelet 315 is calculated using the following equation:

$$C_n = \sum_{i=1}^{s} X_{sn+i} R_i.$$

The watermarked image bit correlation sequence 335 is received by the selector 340 which outputs an uncorrected UMID 345. The selector 340 outputs a "1" for a watermarked image bit correlation value greater than 0 and a bit value "0" for a image bit correlation value less than or equal to 0. The error correction code decoder 350 receives the uncorrected UMID 345 and in known manner outputs a restored UMID 175.

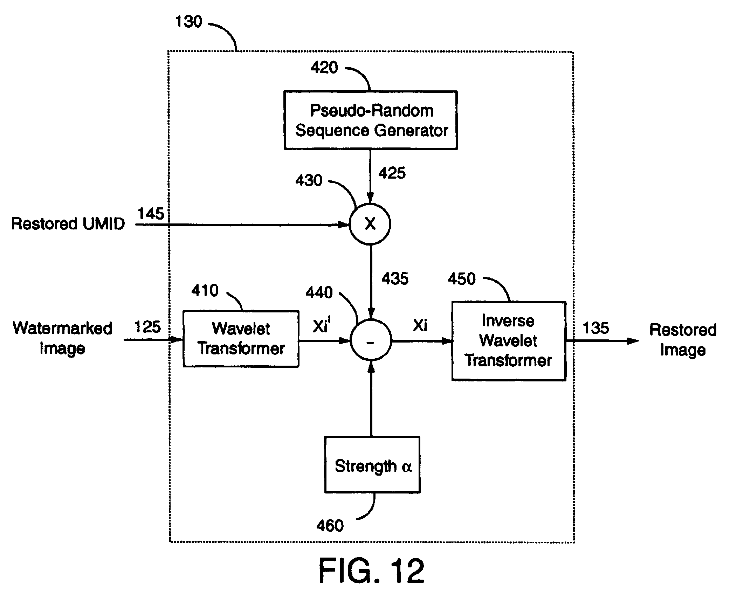

Figure 12, shows a system 130 for removal of the watermark for the watermarked image. The removal system 130 receives the restored UMID 175, the watermarked image 125 and outputs a restored image 135 from which the watermark is removed. The system 130 comprises a pseudo-random sequence generator 420 for generating a pseudo-random sequence 425, a spread spectrum signal generator 430 for receiving a restored UMID 145 and the pseudo-random sequence 425 and for producing a restored watermark 435. The system 130 further comprises: a wavelet transformer 410 for receiving a watermarked image 125 and outputting watermarked wavelet coefficients $X'i$; a watermark subtractor 440 which receives the bits $Wi$ of the restored watermark 435, the watermarked wavelet coefficients $X'i$; and a strength $\alpha$. The substractor outputs restored wavelet coefficients $Xi$ to an inverse wavelet transformer 450. The inverse wavelet transformer 450 outputs the restored image 135.

The watermark subtractor 440 codes a bit "1" of the restored watermark 435 as a "1", and a bit "0" as a "-1". The watermark subtractor 440 applies the following equation: $X_1 = X'_1 - \alpha_n W_i$.

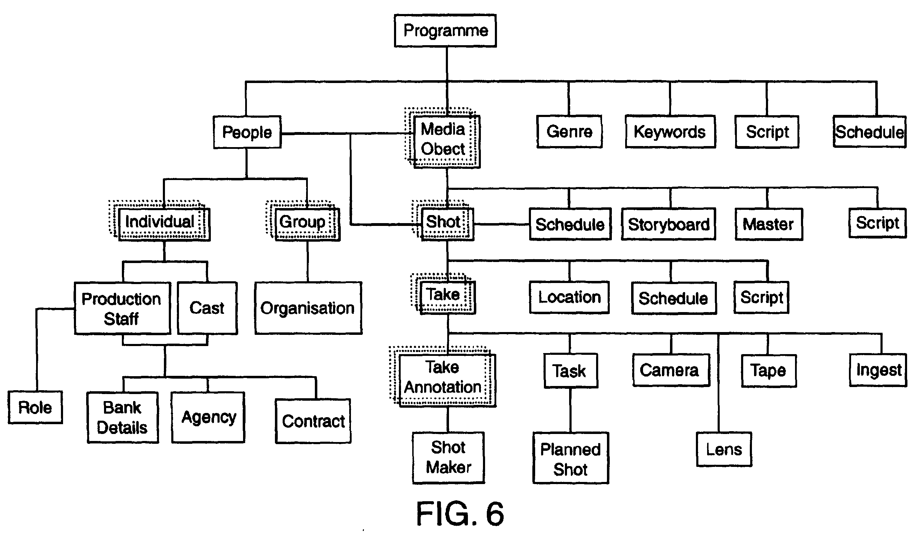

Metadata- Figure 6

The following is provided, by way of example, to illustrate the possible types of metadata generated during the production of a programme, and one possible organisational approach to structuring that metadata.

Figure 6 illustrates an example structure for organising metadata. A number of tables each comprising a number of fields containing metadata are provided. The tables may be associated with each other by way of common fields within the respective tables, thereby providing a relational structure. Also, the structure may comprise a number of instances of the same table to represent multiple instances of the object that the table may represent. The fields may be formatted in a predetermined manner. The size of the fields may also be predetermined. Example sizes include "Int" which represents 2 bytes, "Long Int" which represents 4 bytes and "Double" which represents 8 bytes. Alternatively, the size of the fields may be defined with reference to the number of characters to be held within the field such as, for example, 8, 10, 16, 32, 128, and 255 characters.

Turning to the structure in more detail, there is provided a Programme Table. The Programme Table comprises a number of fields including Programme ID (PID), Title, Working Title, Genre ID, Synopsis, Aspect Ratio, Director ID and Picturestamp. Associated with the Programme Table is a Genre Table, a Keywords Table, a Script Table, a People Table, a Schedule Table and a plurality of Media Object Tables.

The Genre Table comprises a number of fields including Genre ID, which is associated with the Genre ID field of the Programme Table, and Genre Description.

The Keywords Table comprises a number of fields including Programme ID, which is associated with the Programme ID field of the Programme Table, Keyword ID and Keyword.

The Script Table comprises a number of fields including Script ID, Script Name, Script Type, Document Format, Path, Creation Date, Original Author, Version, Last Modified, Modified By, PID associated with Programme ID and Notes. The People Table comprises a number of fields including Image.

The People Table is associated with a number of Individual Tables and a number of Group Tables. Each Individual Table comprises a number of fields including Image. Each Group Table comprises a number of fields including Image. Each Individual Table is associated with either a Production Staff Table or a Cast Table.

The Production Staff Table comprises a number of fields including Production Staff ID, Surname, Firstname, Contract ID, Agent, Agency ID, E-mail, Address, Phone Number, Role ID, Notes, Allergies, DOB, National Insurance Number and Bank ID and Picture Stamp.

The Cast Table comprises a number of fields including Cast ID, Surname, Firstname, Character Name, Contract ID, Agent, Agency ID, Equity Number, E-mail, Address, Phone Number, DOB (date of birth) and Bank ID and Picture Stamp. Associated with the Production Staff Table and Cast Table are a Bank Details Table and an Agency Table.

The Bank Details Table comprises a number of fields including Bank ID, which is associated with the Bank ID field of the Production Staff Table and the Bank ID field of the Cast Table, Sort Code, Account Number and Account Name.

The Agency Table comprises a number of fields including Agency ID, which is associated with the Agency ID field of the Production Staff Table and the Agency ID field of the Cast Table, Name, Address, Phone Number, Web Site and E-mail and a Picture Stamp. Also associated with the Production Staff Table is a Role Table.

The Role Table comprises a number of fields including Role ID, which is associated with the Role ID field of the Production Staff Table, Function and Notes and a Picture Stamp. Each Group Table is associated with an Organisation Table.

The Organisation Table comprises a number fields including Organisation ID, Name, Type, Address, Contract ID, Contact Name, Contact Phone Number and Web Site and a Picture Stamp.

Each Media Object Table comprises a number of fields including Media Object ID, Name, Description, Picturestamp, PID, Format, schedule ID, script ID and Master ID. Associated with each Media Object Table is the People Table, a Master Table, a Schedule Table, a Storyboard Table, a script table and a number of Shot Tables.

The Master Table comprises a number of fields including Master ID, which is associated with the Master ID field of the Media Object Table, Title, Basic UMID, EDL ID, Tape ID and Duration and a Picture Stamp.

The Schedule Table comprises a number of fields including Schedule ID, Schedule Name, Document Format, Path, Creation Date, Original Author, Start Date, End Date, Version, Last Modified, Modified By and Notes and PID which is associated with the programme ID.

The contract table contains: a contract ID which is associated with the contract ID of the Production staff, cast, and organisation tables; commencement date, rate, job title, expiry date and details.

The Storyboard Table comprises a number of fields including Storyboard ID, which is associated with the Storyboard ID of the shot Table, Description, Author, Path and Media ID.

Each Shot Table comprises a number of fields including Shot ID, PID, Media ID, Title, Location ID, Notes, Picturestamp, script ID, schedule ID, and description. Associated with each Shot Table is the People Table, the Schedule Table, script table, a Location Table and a number of Take Tables.

The Location Table comprises a number of fields including Location ID, which is associated with the Location ID field of the Shot Table, GPS, Address, Description, Name, Cost Per Hour, Directions, Contact Name, Contact Address and Contact Phone Number and a Picture Stamp.

Each Take Table comprises a number of fields including Basic UMID, Take Number, Shot ID, Media ID, Timecode IN, Timecode OUT, Sign Metadata, Tape ID, Camera ID, Head Hours, Videographer, IN Stamp, OUT Stamp. Lens ID, AUTOID ingest ID and Notes. Associated with each Take Table is a Tape Table, a Task Table, a Camera Table, a lens table, an ingest table and a number of Take Annotation Tables.

The Ingest table contains an Ingest ID which is associated with the Ingest Id in the take table and a description.

The Tape Table comprises a number of fields including Tape ID, which is associated with the Tape ID field of the Take Table, PID, Format, Max Duration, First Usage, Max Erasures, Current Erasure, ETA ( estimated time of arrival) and Last Erasure Date and a Picture Stamp.

The Task Table comprises a number of fields including Task ID, PID, Media ID, Shot ID, which are associated with the Media ID and Shot ID fields respectively of the Take Table, Title, Task Notes, Distribution List and CC List. Associated with the Task Table is a Planned Shot Table.

The Planned Shot Table comprises a number of fields including Planned Shot ID, PID, Media ID, Shot ID, which are associated with the PID, Media ID and Shot ID respectively of the Task Table, Director, Shot Title, Location, Notes, Description, Videographer, Due date, Programme title, media title Aspect Ratio and Format.

The Camera Table comprises a number of fields including Camera ID, which is associated with the Camera ID field of the Take Table, Manufacturer, Model, Format, Serial Number, Head Hours, Lens ID, Notes, Contact Name, Contact Address and Contact Phone Number and a Picture Stamp.

The Lens Table comprises a number of fields including Lens ID, which is associated with the Lens ID field of the Take Table, Manufacturer, Model, Serial Number, Contact Name, Contact Address and Contact Phone Number and a Picture Stamp.

Each Take Annotation Table comprises a number of fields including Take Annotation ID, Basic UMID, Timecode, Shutter Speed, Iris, Zoom, Gamma, Shot Marker ID, Filter Wheel, Detail and Gain. Associated with each Take Annotation Table is a Shot Marker Table.

The Shot Marker Table comprises a number of fields including Shot Marker ID, which is associated with the Shot Marker ID of the Take Annotation Table, and Description.

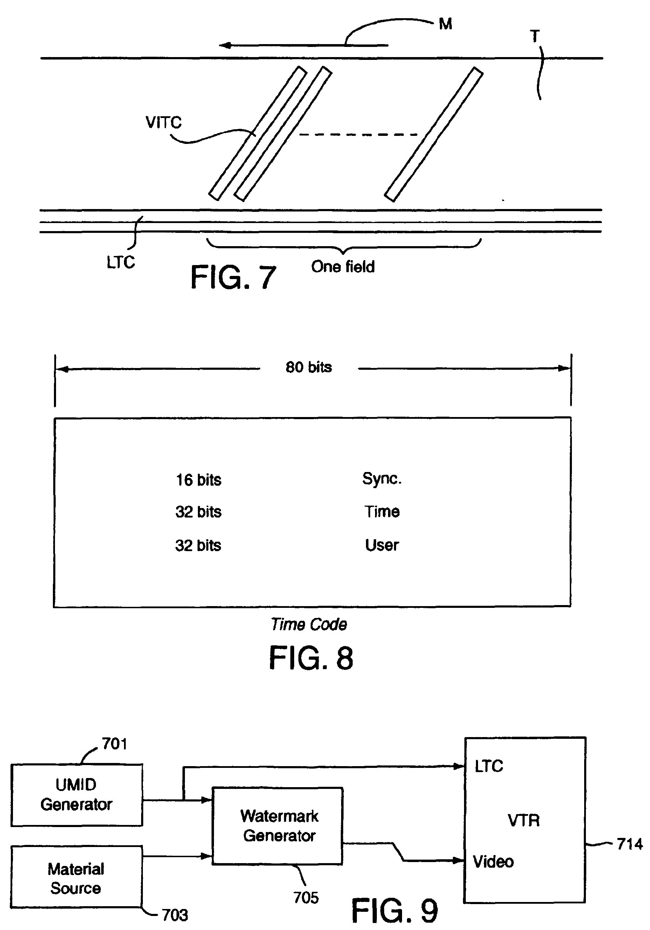

Insertion into LTC -Figures 7 to 9

Referring to Figure 7, a tape format is shown schematically. Video and audio information is recorded in helical tracks of which a set of, e.g. 10 or 12, tracks records one field of video. The helical tracks include vertical interval time codes (VITC). The time codes may be duplicated in a linear time code track LTC, but the contents of the VITC and LTC may be different. The tape may comprise at least one other linear track (not shown). In this illustrative description it is assumed that all video, audio and other information is recorded digitally. However, the video and audio may be recorded as analogue information. The video and audio information may be compressed according to the MPEG 2 standard for example.

The time codes are recorded once per video field. As schematically shown in Figure 8, a known time code has 80 bits of which 16 are reserved for synchronisation information, 32 for time code bits and 32 for user defined bits, herein referred to as "user bits". The user bits are interleaved with the other bits in a typical time code; however the invention is not limited to that.

The code, the UMID, is recorded in the user bits of the linear time code. If it has 64 bits it occupies two time codes. It thus refers to one frame of two video fields. In preferred embodiments the same code is repeated every frame. Preferably, the tape is "prestriped" before use to record linear time codes for the fields.

Referring to Figure 9, a UMID generator 701 generates a UMID and a material source 703 provides in this example video material. The UMID and video material are fed to a watermark generator 705 which inserts the UMID as a watermark into the video. The watermarked video and the UMID from the generator are fed to a VTR 714 to record the UMID in the LTC and to record the watermarked video in the video tracks.

Variants

Instead of using a UMID, which is universally unique, another material identifier could be used. For example, for material originally recorded on a record medium, the identifier could be a serial number of a series thereof which identify the media of an organisation, plus IN and OUT time codes of material on the medium. That data could then be linked to for example a UMID in a database. Other material identifiers could be used.

Whilst the foregoing description, by way of example, illustrates the invention by reference to video material, the invention may be applied to any one or more of video material, audio material and data material.

**Claims**

1. A method of identifying material comprising the step of inserting an identifying code into a material as a watermark, which code directly or indirectly identifies the material.

2. A method according to claim 1, wherein metadata relating to the material is stored in a database and the identifying code links the material to the metadata in the database.

**3.** A method according to claim 1, 2 or 3, wherein the identifying code also identifies the owner of the material.

**4.** A method according to claim 1, 2, 3 or 4, wherein the identifying code indirectly identifies the material.

**5.** A method according to claim 4, wherein the material is recorded on a recording medium and the identifying code identifies the example of the medium on which the material is recorded.

**6.** A method according to anyone of claims 1 to 3, wherein the identifying code directly identifies the material.

**7.** A method according to claim 6, wherein the identifying code uniquely identifies the material.

**8.** A method according to claim 7, wherein the identifying code is a UMID.

**9.** A method according to claim 8, wherein the instance number field of the UMID is used to contain a fingerprinting code.

**10.** A method according to claim any one of claims 1 to 9, wherein the identifying code includes data identifying authorised users of the material.

**11.** A method according to claim 10 when dependent on claim 8, wherein the data identifying authorised users is included in the instance number field of the UMID.

**12.** A method according to claim 10 or 11, wherein the said data identifying authorised users is generated by a random number generator.

**13.** A method according to claim 10 or 11, wherein the said data identifying authorised users is generated by an authorised user registry.

**14.** A method according to any preceding claim, wherein the material is any one or more of video material, audio material, and data material.

**15.** A method according to claim 14, wherein the material comprises frames and the identifying code is in every frame of the material.

**16.** A method according to claim 14 or 15, wherein the identifying code includes a time code.

**17.** A method according to any preceding claim, wherein the identifying code is additionally associated with the material other than as a watermark in the material.

**18.** A method according to claim 17, wherein the material is video material and the identifying code is additionally in user bits of linear and/or vertical interval time codes.

**19.** Apparatus comprising a code generator for generating a code directly or indirectly identifying material, and a watermark generator for inserting the code into the material as a watermark.

**20.** Apparatus according to claim 19, comprising a database processor storing metadata relating to the material, and a communication link for linking the to the database processor, the identifying code linking the material to the metadata in the database.

**21.** Apparatus according to claim 19 or 20, wherein the identifying code also identifies the owner of the material.

**22.** Apparatus according to claim 19, 20 or 21, wherein the identifying code indirectly identifies the material.

**23.** Apparatus according to claim 22, comprising a recorder for recording the material on a recording medium, and wherein the identifying code identifies the example of the medium on which the material is recorded.

**24.** Apparatus according to anyone of claims 19 to 22, wherein the identifying code directly identifies the material.

**25.** Apparatus according to claim 24, wherein the identifying code uniquely identifies the material.

**26.** Apparatus according to claim 25, wherein the identifying code is a UMID.

**27.** Apparatus according to claim 26, wherein the instance number field of the UMID is used to contain a fingerprinting code.

**28.** Apparatus according to any one of claims 19 to 26, wherein the identifying code includes data identifying authorised users of the material.

**29.** Apparatus according to claim 28 when dependent on claim 26, wherein the data identifying authorised users is included in the instance number field of the UMID.

**30.** Apparatus according to claim 28 or 29, comprising a random number generator for generating the said data identifying authorised users.

**31.** Apparatus according to claim 28 or 29, comprising an authorised user registry for generating the said data identifying authorised users.

**32.** Apparatus according to any one of claims 19 to 31, wherein the material is any one or more of video material, audio material and data material.

**33.** Apparatus according to claim 32, wherein the material comprises frames and the generator is arranged to insert the identifying code into every frame of the material.

**34.** Apparatus according to claim 32 or 33, wherein the identifying code includes a time code.

**35.** Apparatus according to any preceding claim comprising means for additionally associating the identifying code with the material other than as a watermark in the material.

**36.** Apparatus according to claim 35, wherein the material is video material and comprising means for inserting the identifying code in user bits of linear and/or vertical interval time codes.

**37.** Apparatus according to anyone of claims 19 to 36, wherein the watermark generator is a frequency domain watermark generator.

**38.** Apparatus according to anyone of claims 19 to 36, wherein the watermark generator is a time domain watermark generator.

**39.** Apparatus or method according to any preceding claim, wherein the watermark is robust.

**40.** Apparatus or method according to any preceding claim, wherein the watermark is reversible.

FIG. 1

Overview

EP 1 098 522 A1

Extended UMID (64 bytes)

| Basic UMID (32 bytes) | | | | Signature Metadata (32 bytes) | | | |
|---|---|---|---|---|---|---|---|

| Universal Label | L | | Material Number | Time/Date | Spatial Co-ordinates | Country | Org | User |
|---|---|---|---|---|---|---|---|---|
| 12 bytes | 1 | 1 byte | 16 bytes | 8 bytes | 12 bytes | 4 bytes | 4 bytes | 4 bytes |

*Basic and Extended UMID Structures*

## FIG. 2

| 1 | 1 | 1 | 1 | 3 | 16 | 32 |
|---|---|---|---|---|---|---|
| Type | L | B11 | B12 | Instance | Material | Signature Metadata |

## FIG. 3

EP 1 098 522 A1

EP 1 098 522 A1

663

650          700          ┌──────────────┐          670

┌──────────┐   652    →   │  Watermark   │   705    →   ┌──────────┐
│  Source  │ ─────────→   │   Inserter   │ ─────────→   │  Store   │
└──────────┘              └──────────────┘              └──────────┘

## FIG. 4

663

650        655          660          ┌──────────────┐        665          670

┌──────────┐  652  ┌──────────────┐  657  │  Watermark   │  664  ┌──────────────┐  667  ┌──────────┐
│  Source  │ ────→ │  Frequency   │ ────→ │   Inserter   │ ────→ │   Inverse    │ ────→ │  Store   │
│          │       │ Transformer  │       │              │       │ Transformer  │       │          │
└──────────┘       └──────────────┘       └──────────────┘       └──────────────┘       └──────────┘

## FIG. 5

FIG. 6

EP 1 098 522 A1

M

T

VITC

LTC

## FIG. 7

One field

80 bits

16 bits        Sync.

32 bits        Time

32 bits        User

*Time Code*

## FIG. 8

701

UMID Generator

LTC

Watermark Generator

VTR

714

Material Source

Video

703

705

## FIG. 9

FIG. 10

FIG. 11

130

420

Pseudo-Random
Sequence Generator

430

425

Restored UMID 145 → X

435

410 440 450

Watermarked 125 → Wavelet Xi' → − → Xi → Inverse 135 → Restored
Image Transformer Wavelet Image
Transformer

Strength α

460

FIG. 12

**European Patent Office**

## EUROPEAN SEARCH REPORT

Application Number

EP 00 30 9266

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DEPOVERE G ; KALKER T ; HAITSMA J ; MAES M ; DE STRYCKER L ; TERMONT P : "The VIVA project: digital watermarking for broadcast monitoring" PROCEEDINGS 1999 INTERNATIONAL CONFERENCE ON IMAGE PROCESSING (CAT. 99CH36348), PROCEEDINGS OF 6TH INTERNATIONAL CONFERENCE ON IMAGE PROCESSING (ICIP'99), vol. 2, 24 - 28 October 1999, pages 202-205, XP002159425 Kobe, Japan * the whole document * | 1,2,4,6, 7,14-17, 19,20, 22,24, 25,27, 32-40 | H04N7/24 |
| X | BLOOM J A ET AL: "COPY PROTECTION FOR DVD VIDEO" PROCEEDINGS OF THE IEEE,US,IEEE. NEW YORK, vol. 87, no. 7, July 1999 (1999-07), pages 1267-1276, XP000861525 ISSN: 0018-9219 * the whole document * | 1,3-7, 14, 19-24, 32,37-39 | |
| X | AUGOT D ; BOUCQUEAU J -M ; DELAIGLE J -F ; FONTAINE C ; GORAY E: "Secure Delivery of Images over Open Networks" PROC. IEEE (USA), PROCEEDINGS OF THE IEEE, vol. 87, no. 7, July 1999 (1999-07), pages 1251-1266, XP002159426 IEEE, USA * paragraphs [0001]-[0003] * | 1-5, 19-23 | TECHNICAL FIELDS SEARCHED (Int.Cl.7) H04N G11B G06F G06T |
| X | ZHAO J: "a www service to embed and prove digital copyright watermarks" CONFERENCE PROCEEDINGS, 28 May 1996 (1996-05-28), XP000199921 * the whole document * | 1-4, 19-22, 37-40 | |

-/--

The present search report has been drawn up for all claims

| Place of search | Date of completion of the search | Examiner |
|---|---|---|
| THE HAGUE | 5 February 2001 | Marie-Julie, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 00 30 9266

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 859 503 A (NIPPON ELECTRIC CO) 19 August 1998 (1998-08-19) <br><br> * column 3, line 53 - column 5, line 4 * <br> --- | 1,2,4, 14,19, 20,22, 32,37-40 | |
| X | US 5 739 864 A (COPELAND GREGORY C) 14 April 1998 (1998-04-14) <br><br> * column 2, line 3 - column 4, line 25 * <br> --- | 1,14,15, 17-19, 32,33, 35-39 | |
| X | EP 0 942 417 A (SONY CORP) 15 September 1999 (1999-09-15) | 1,19 | |
| A | * the whole document * <br><br> --- | 2-7, 20-25 | |
| X | COX I J ET AL: "SOME GENERAL METHODS FOR TAMPERING WITH WATERMARKS" IEEE JOURNAL ON SELECTED AREAS IN COMMUNICATIONS,IEEE INC. NEW YORK,US, vol. 16, no. 4, May 1998 (1998-05), pages 587-593, XP000765117 ISSN: 0733-8716 * the whole document * <br> ----- | 1,14,19, 32 | TECHNICAL FIELDS SEARCHED (Int.Cl.7) |

The present search report has been drawn up for all claims

| Place of search | Date of completion of the search | Examiner |
|---|---|---|
| THE HAGUE | 5 February 2001 | Marie-Julie, J-M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .........................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 00 30 9266

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2001

| Patent document cited in search report | | Publication date | Patent family member(s) | | Publication date |
|---|---|---|---|---|---|
| EP 0859503 | A | 19-08-1998 | JP | 10224793 A | 21-08-1998 |
| | | | CA | 2229395 A | 12-08-1998 |
| US 5739864 | A | 14-04-1998 | AU | 698870 B | 12-11-1998 |
| | | | AU | 3370395 A | 14-03-1996 |
| | | | BR | 9508624 A | 18-11-1997 |
| | | | CA | 2195942 A | 29-02-1996 |
| | | | CN | 1160467 A | 24-09-1997 |
| | | | EP | 0777946 A | 11-06-1997 |
| | | | EP | 0853433 A | 15-07-1998 |
| | | | JP | 10504944 T | 12-05-1998 |
| | | | NZ | 292020 A | 28-10-1998 |
| | | | WO | 9606503 A | 29-02-1996 |
| | | | US | 5659613 A | 19-08-1997 |
| | | | US | 5668603 A | 16-09-1997 |
| EP 0942417 | A | 15-09-1999 | JP | 11259764 A | 24-09-1999 |

EPO FORM P0459

For more details about this annex : see Official Journal of the European Patent Office, No. 12/82